# EUROPÄISCHE PATENTSCHRIFT

(11) **EP 4 355 511 B1**
(45) Veröffentlichungstag und Bekanntmachung des Hinweises auf die Patenterteilung: **25.12.2024**
(21) Anmeldenummer: 23730352.4
(22) Anmeldetag: 08.06.2023
(51) Int. Cl.: B21K 1/76, B21K 1/04, F16C 33/64

(54) **VERFAHREN UND UMFORMVORRICHTUNG ZUR HERSTELLUNG VON RINGFÖRMIGEN FORMTEILEN**
METHOD AND FORMING DEVICE FOR PRODUCING ANNULAR MOLDED PARTS
PROCÉDÉ ET DISPOSITIF DE FORMAGE POUR LA FABRICATION DE PIÈCES MOULÉES ANNULAIRES

(30) Priorität: 13.06.2022 CH 7142022
(43) Veröffentlichungstag der Anmeldung: 24.04.2024
(73) Patentinhaber: Hatebur Umformmaschinen AG, 4153 Reinach (CH)
(72) Erfinder: SIEBER, Carsten, 4058 Basel (CH); RITTER, Olivier, 68128 Village-Neuf (FR)
(74) Vertreter: Bohest AG
(86) Internationale Anmeldenummer: PCT/CH2023/050021
(87) Internationale Veröffentlichungsnummer: WO 2023/240371

(56) Entgegenhaltungen:
- EP-A1- 3 362 204
- EP-B1- 3 362 204
- CN-A- 105 057 556
- JP-A- 2004 141 964
- JP-A- 2008 302 403
- JP-A- 2013 240 819
- US-A- 1 387 638
- US-A- 3 968 674
- US-A- 4 590 780
- US-A- 6 065 322

## Beschreibung

Die vorliegende Erfindung betrifft ein Verfahren und eine Vorrichtung zur Herstellung eines inneren und eines äusseren ringförmigen Formteils aus einem Rohling.

Bei der Herstellung von Wälzlagerringen wird typischerweise zunächst in einer Umformvorrichtung ein Paar von Ringen hergestellt, von denen der eine den Innenring und der andere den Aussenring eines Wälzlagers bildet. Zur Herstellung besagter Ringe wird in bekannten Verfahren zunächst aus einem Rohling durch Napffliesspressen ein Formling mit einem inneren und einem äusseren ringförmigen Abschnitt und einem Napfboden bzw. Butzen hergestellt. Diese ringförmigen Abschnitte werden dann voneinander und vom Napfboden getrennt und durch weitere Arbeitsschritte wie Walzen und Aufweiten zum Innenring und zum Aussenring des Wälzlagers weiterverarbeitet, wie beispielsweise in der EP 3 362 204 B1 beschrieben.

Aus der US 6 065 322 A ist ein Verfahren bekannt, in dem der Formling mit den beiden ringförmigen Abschnitten und dem Napfboden bzw. Butzen in einem Umformschritt durch Napffliesspressen aus dem Rohling hergestellt wird. In diesem Umformverfahren drückt ein abgestufter Umformstempel gegen den in einer Umformmatrize angeordneten Rohling, wodurch in einem Umformschritt - d.h. in nur einer Umformstufe mit nur einer Matrize und ohne dass die Umformstufe bzw. die Matrize modifiziert wird - die beiden ringförmigen Abschnitte und der Napfboden aus dem Rohling geformt werden.

Um die beiden ringförmigen Abschnitte voneinander trennen zu können und die Weiterverarbeitung zu den Wälzlagerringen zu ermöglichen, sind die ringförmigen Abschnitte typischerweise derart angeordnet, dass sie in radialer Richtung nicht überlappen und in axialer Richtung versetzt sind. Dies setzt ein stufenförmiges Profil der Umformmatrize und ein entsprechendes stufenförmiges Profil des Umformstempels der Umformstufe voraus.

Ein Problem dabei ist, dass das stufenförmige Profil des Umformstempels und der Umformmatrize den Fluss des Materials des Rohlings beim Napffliesspressen einschränkt. Das Material kann nicht ungehindert durch den Umformstempel verdrängt werden und der Napfboden des Formteils kann deswegen nicht beliebig dünn ausgeformt werden. Da der Napfboden bzw. Butzen in einem folgenden Arbeitsschritt entfernt und als Materialausschuss entsorgt wird, hat dies einen unnötig hohen Materialausschuss zur Folge, den es möglichst zu reduzieren gilt.

Die CN 105057556 B offenbart ein Verfahren, bei dem ein zylinderförmiger Rohling zunächst durch Napffliesspressen in einen Napf mit einem Napfboden und einer daran anschliessenden stufenlosen Napfwand vorgeformt wird. In einem nächsten Schritt werden dann die Napfwand und der Napfboden weiter in einen Formling mit einem inneren und einem äusseren ringförmigen Abschnitt und einem Restbodenteil in der Mitte des inneren ringförmigen Abschnitts umgeformt. Dies erfolgt wie bei dem aus der US 6 065 322 A bekannten Verfahren mittels eines abgestuften Umformstempels und einer abgestuften Umformmatrize mit dem bekannten Problem, dass der Fluss des Materials beim Umformen eingeschränkt ist und das Material nicht ungehindert durch den Umformstempel verdrängt werden und der Restbodenteil deswegen nicht beliebig dünn ausgeformt werden kann. Ausserdem müssen sowohl die vorgeformte Napfwand als auch der vorgeformte Napfboden nach der Vorformung noch weiter umgeformt werden.

Vor diesem Hintergrund liegt der Erfindung die Aufgabe zugrunde, ein Verfahren und eine Umformvorrichtung bereitzustellen, die es ermöglichen, den Napfboden des Formlings dünner als in den bekannten Verfahren mit den bekannten Umformvorrichtungen auszuformen und so den Materialauschuss zu minimieren.

Diese Aufgabe wird durch das erfindungsgemässe Verfahren und die erfindungsgemässe Umformvorrichtung zur Herstellung eines inneren und eines äusseren ringförmigen Formteils aus einem Rohling gelöst, wie sie in den unabhängigen Patentansprüchen 1 und 8 definiert sind. Besonders vorteilhafte Weiterbildungen und Ausgestaltungen des erfindungsgemässen Verfahrens und der erfindungsgemässen Umformvorrichtung ergeben sich aus den jeweils abhängigen Patentansprüchen.

Das Wesen der Erfindung besteht bezüglich des Verfahrens darin, dass ein Verfahren zur Herstellung eines inneren und eines äusseren ringförmigen Formteils aus einem Rohling die folgenden Schritte umfasst:
- Napffliesspressen des Rohlings zu einem Napf mit einem ausgeformten Napfboden und einer daran anschliessenden stufenlosen Napfwand,
- Umformen der Napfwand derart, dass die umgeformte Napfwand einen inneren ringförmigen Abschnitt und einen daran anschliessenden, in axialer Richtung teilweise versetzten äusseren ringförmigen Abschnitt umfasst, und
- Trennen des äusseren ringförmigen Abschnitts vom inneren ringförmigen Abschnitt sowie Trennen des inneren ringförmigen Abschnitts vom ausgeformten Napfboden, wobei der abgetrennte äussere ringförmige Abschnitt das äussere ringförmige Formteil bildet und der abgetrennte innere ringförmige Abschnitt das innere ringförmige Formteil bildet.

Ein Vorteil des erfindungsgemässen Verfahrens besteht darin, dass im ersten Schritt des Verfahrens ein Napf mit einem ausgeformten Napfboden und einer daran anschliessenden stufenlosen Napfwand gebildet wird. Stufenlos ist dabei so zu verstehen, dass ein Querschnitt der geformten Napfwand keine stufenförmigen Konturen aufweist. Es gibt somit keine abrupten Übergänge zwischen Bereichen verschiedener Innen- oder Aussendurchmesser in der Napfwand. Eine solche stufenlose Napfwand lässt sich entsprechend mit stufenlosen Umformwerkzeugen wie beispielsweise einem stufenlosen Umformstempel und einer stufenlosen Umformmatrize formen. Dadurch wird der Fluss des Materials des Rohlings nicht durch Stufenformen behindert und das Umformwerkzeug, insbesondere der Umformstempel, kann das Material des Rohlings beim Napffliesspressen weitestgehend ungehindert verdrängen. Auf diese Weise lässt sich ein verhältnismässig dünner Napfboden ausformen. Im Schritt des Napffliesspressens wird der Napfboden des Napfs im Wesentlichen fertig ausgeformt und im darauffolgenden Schritt des Umformens der Napfwand nicht mehr wesentlich weiter umgeformt. Dies impliziert auch, dass die Dicke des Napfbodens durch den Schritt des Napffliesspressen festgesetzt und beim Umformen der Napfwand weitestgehend nicht mehr verändert wird. Bei den oben diskutierten Verfahren des Standes der Technik, bei denen die ringförmigen Abschnitte der geformten Napfwand im gleichen Schritt wie der Napfboden bzw. der Restbodenteil geformt werden, wird aufgrund der dazu benötigten Stufen im Querschnitt der entsprechenden Umformwerkzeuge der Materialfluss behindert, was einen im Vergleich zum erfindungsgemässen Verfahren dickeren Napfboden bzw. Restbodenteil zur Folge hat.

Das Trennen des äusseren ringförmigen Abschnitts vom inneren ringförmigen Abschnitt sowie das Trennen des inneren ringförmigen Abschnitts vom ausgeformten Napfboden, wobei der abgetrennte äussere ringförmige Abschnitt das äussere ringförmige Formteil bildet und der abgetrennte innere ringförmige Abschnitt das innere ringförmige Formteil bildet, können gleichzeitig oder auch zeitversetzt und unabhängig voneinander erfolgen. Dabei kann beispielsweise in einem ersten Trennschritt der äussere ringförmige Abschnitt vom inneren ringförmigen Abschnitt getrennt werden und in einem zweiten Trennschritt der innere ringförmige Abschnitt vom ausgeformten Napfboden getrennt werden oder umgekehrt. Die beiden Trennschritte können in derselben Umformstufe oder in verschiedenen Umformstufen erfolgen.

Die mit dem erfindungsgemässen Verfahren hergestellten inneren und äusseren ringförmigen Formteile werden beispielsweise in darauffolgenden Arbeitsschritten wie Walzen und Aufweiten zu einem Innenring und einem Aussenring eines Wälzlagers weiterverarbeitet, wie z.B. in der EP 3 362 204 B1 beschrieben. Da der Napfboden abgetrennt wird und als Ausschussmaterial entsorgt wird, lässt sich durch das erfindungsgemässe Verfahren der Materialauschuss wegen des dünneren Napfbodens verringern. Weiterhin wird aufgrund des geringeren Kraftaufwands auch der Energieverbrauch für den Umformprozess reduziert.

Typische Materialien für den Rohling für die Herstellung von solchen ringförmigen Formteilen zur Weiterverarbeitung zu Wälzlagerringen umfassen Metalle wie beispielsweise Stahl bzw. Wälzlagerstahl.

Ein Rohling ist insbesonders dann gut für das erfindungsgemässe Verfahren geeignet, wenn sein Aussendurchmesser ungefähr einem Aussendurchmessers des äusseren ringförmigen Formteils entspricht. Der Rohling ist vorteilhafterweise scheibenförmig.

Vorzugsweise wird beim Napffliesspressen des Rohlings der Napfboden zwischen einer Stirnfläche eines ersten Umformstempelteils und einer Stützfläche eines Auswerfers geformt.

Das Formen des Napfbodens zwischen einer Stirnfläche eines ersten Umformstempelteils sowie einer Stützfläche eines Auswerfers hat den Vorteil, dass sich durch Bewegen des Auswerfers mit der Stützfläche die Form der Umformstufe variieren lässt. Insbesondere können in einer besonders vorteilhaften Ausführungsvariante, in der der Auswerfer zurückbewegbar, d.h. in einer vom Umformstempel wegzeigenden Richtung bewegbar, angeordnet ist, Bereiche einer Umformmatrize, insbesondere ein stufenförmiger Bereich, durch ein Zurückbewegen der Stützfläche freigegeben werden, was ein mehrstufiges Umformverfahren mit nur einer Umformstufe ermöglicht. Des Weiteren lässt sich der umgeformte Napf nach dem Umformen der Napfwand mittels der am Auswerfer angeordneten Stützfläche einfach auswerfen, ohne dass ein Auswurfelement zusätzlich zum ohnehin für das Formen des Napfbodens verwendeten Auswerfer mit der Stützfläche nötig ist.

Mit Vorteil wird beim Napffliesspressen des Rohlings zumindest ein Teil einer umlaufenden Innenfläche des inneren ringförmigen Formteils durch eine umlaufende Aussenfläche des ersten Umformstempelteils geformt.

Eine umlaufende Aussenfläche wird hier als Seitenfläche verstanden, die den Umformstempelteil von der Stirnfläche wegragend an einer Seite des Umformstempelteils umgibt. Ein derart ausgebildeter erster Umformstempelteil ist von Vorteil für die Verdrängung des Materials des Rohlings. Dadurch lässt sich sicherstellen, dass während des Napffliesspressens kein Material des Rohlings hinter die Stirnfläche des Umformstempelteils fliesst, welches im darauffolgenden Schritt des Umformens der Napfwand wieder verdrängt werden müsste. Des Weiteren wird dadurch zumindest ein Teil der umlaufenden Innenfläche des inneren ringförmigen Formteils bereits ausgeformt und ein zusätzliches Umformen dieser Innenfläche im darauffolgenden Schritt des Umformens der Napfwand lässt sich so vermeiden.

In einer vorteilhaften Ausführungsvariante erfolgt das Napffliesspressen des Rohlings in einer ersten Umformstufe mit einer stufenlosen Umformmatrize und das Umformen der Napfwand in einer zweiten Umformstufe mit einer einen stufenförmigen Bereich aufweisenden Umformmatrize.

Hierbei wird der Napf nach dem Napffliesspressen aus der ersten Umformstufe mit der stufenlosen Umformmatrize in eine zweite Umformstufe mit einer von der stufenlosen Umformmatrize verschiedenen, einen stufenförmigen Bereich aufweisende Umformmatrize umgesetzt. Das hat den Vorteil, dass das erfindungsgemässe Verfahren durchgeführt werden kann, ohne dass bewegliche Elemente erforderlich sind, um die Form der Umformmatrize zu verändern bzw. Teile der Umformmatrize, die für das Napffliesspressen des Rohlings nicht zugänglich sind, freizugeben.

In einer alternativen vorteilhaften Ausführungsvariante werden das Napffliesspressen des Rohlings und das Umformen der Napfwand nacheinander in derselben Umformstufe mit nur einer Umformmatrize durchgeführt.

Diese Ausführungsvariante hat den Vorteil, dass der Napf nach dem Napffliesspressen nicht von einer Umformstufe bzw. Umformmatrize in eine andere umgesetzt werden muss. Dadurch lässt sich die für das Umsetzen benötigte Zeit einsparen. Ausserdem lässt sich das für das Umsetzen des Napfs benötigte Greifwerkzeug sowie der für die zusätzliche Umformstufe benötigte Platz einsparen.

Vorzugsweise umfasst die Umformmatrize einen stufenförmigen Bereich zum Umformen der Napfwand und wird durch Zurückbewegen des Auswerfers mit der Stützfläche eine umlaufende Innenfläche des stufenförmigen Bereichs der Umformmatrize freigegeben.

Dies hat den Vorteil, dass der Auswerfer mit der Stützfläche, der ohnehin bereits für das Formen des Napfbodens sowie zum Auswerfen des umgeformten Napfs eingesetzt wird, auch zum Anpassen der für das Napffliesspressen verwendeten Umformmatrize verwendet werden kann. Es sind somit hierfür keine weiteren bewegbaren Elemente nötig. Dies ist eine einfache Methode, um nach dem Napffliesspressen einen stufenförmigen Bereich der Umformmatrize zum Umformen der Napfwand bereitzustellen. Unter stufenförmigen Bereich einer Umformmatrize wird hierbei der Bereich einer Umformmatrize verstanden, dessen Querschnitt aufgrund von Teilbereichen mit verschiedenen Innendurchmessern stufenförmige Konturen aufweist. Ein solcher stufenförmiger Bereich der Umformmatrize ist nötig, um die jeweiligen Aussenflächen des inneren und des äusseren ringförmigen Abschnitts des umgeformten Napfs zu formen, die verschiedene Aussendurchmesser aufweisen.

In einer bevorzugten Ausführungsvariante erfolgt das Napffliesspressen des Rohlings und das Umformen der Napfwand durch Warmumformen bei Temperaturen ab 500°C.

Warmumformen bei den besagten Temperaturen ermöglicht ein im Vergleich zum Kaltumformen einfacheres Umformen des Rohlings bzw. des Napfs.

Eine erfindungsgemässe Umformvorrichtung zur Herstellung eines inneren und eines äusseren ringförmigen Formteils aus einem Rohling umfasst:
- einen ersten Umformstempelteil für ein Napffliesspressen des Rohlings zu einem Napf mit einem ausgeformten Napfboden und einer daran anschliessenden stufenlosen Napfwand,
- einen zweiten Umformstempelteil sowie eine einen stufenförmigen Bereich aufweisende Umformmatrize zum Umformen der Napfwand derart, dass sie einen inneren ringförmigen Abschnitt und einen daran anschliessenden, in axialer Richtung teilweise versetzten äusseren ringförmigen Abschnitt umfasst,
   und
- ein Trennwerkzeug zum Trennen des äusseren ringförmigen Abschnitts vom inneren ringförmigen Abschnitt sowie zum Trennen des inneren ringförmigen Abschnitts vom ausgeformten Napfboden, wobei der abgetrennte äussere ringförmige Abschnitt den äusseren ringförmigen Formteil bildet und der abgetrennte innere ringförmige Abschnitt das innere ringförmige Formteil bildet.

Die erfindungsgemässe Umformvorrichtung bietet dieselben Vorteile wie das erfindungsgemässe Verfahren.

Stufenförmig und stufenlos wird hierbei wie oben beschrieben verstanden. Das erste und das zweite Umformstempelteil können dabei verschiedene Teile desselben Umformstempels sein, aber auch Teile zweier verschiedener Umformstempel. Ein geeignetes Trennwerkzeug kann in einer bevorzugten Ausführungsvariante ein Stanzwerkzeug sein. Zusätzliche Werkzeuge, wie beispielsweise ein Walzwerkzeug oder ein Aufweitwerkzeug, können vorgesehen sein.

Vorzugsweise umfasst die Umformvorrichtung einen Auswerfer mit einer Stützfläche und der erste Umformstempelteil eine Stirnfläche zum Formen des Napfbodens beim Napffliesspressen des Rohlings.

Der Auswerfer ist mit Vorteil sowohl zum Auswerfen des umgeformten Napfs als auch zum Bereitstellen und Halten der Stützfläche während des Napfliesspressens bzw. Umformens der Napfwand ausgebildet und lässt sich vorzugsweise mittels eines hydraulisch gesteuerten Aktuators bewegen. Ein geeignetes hydraulisches System, das genügend Abstützkraft bereitstellt, damit der Auswerfer auch zum Halten der Stützfläche während des Napffliesspressens bzw. Umformens der Napfwand geeignet ist, ist in der EP 3 362 204 B1 beschrieben.

Die Stützfläche des Auswerfers und die Stirnfläche des ersten Umformstempelteils sind dabei vorzugsweise gegenüberliegend angeordnet, um ein Formen des Napfbodens zwischen diesen beiden Flächen zu ermöglichen. Vorzugsweise sind die Abstände zwischen der Stirnfläche und Stützfläche an einer dünnsten Stelle in einem Bereich von 1 mm bis 6 mm, um einen Napfboden entsprechender Dicke zu formen. In einer vorteilhaften Ausführungsvariante umfasst der erste Umformstempelteil eine erste umlaufende Aussenfläche zum Formen zumindest eines Teils einer umlaufenden Innenfläche des inneren ringförmigen Formteils.

In einer weiteren vorteilhaften Ausführungsvariante ist der Auswerfer mit der Stützfläche zurückbewegbar angeordnet, um eine umlaufende Innenfläche des stufenförmigen Bereichs der Umformmatrize zum Umformen der Napfwand freizugegeben.

Zurückbewegbar ist hier als bewegbar in einer vom Umformstempelteil wegzeigenden Richtung zu verstehen. Der Auswerfer kann beispielsweise aufgrund der vom ersten Umformstempelteil auf den Rohling oder Napf ausgeübten Kraft zurückbewegt werden.

Bei einer vorteilhaften Ausführungsvariante sind der erste Umformstempelteil, der zweite Umformstempelteil sowie die den stufenförmigen Bereich aufweisende Umformmatrize Teil einer gemeinsamen Umformstufe.

Bei einer alternativen vorteilhaften Ausführungsvariante sind der erste Umformstempelteil sowie eine stufenlose Umformmatrize Teil einer ersten Umformstufe und der zweite Umformstempelteil sowie die den stufenförmigen Bereich aufweisende Umformmatrize Teil einer zweiten Umformstufe.

Im Folgenden werden das erfindungsgemässe Verfahren und die erfindungsgemässe Umformvorrichtung zur Herstellung eines inneren und eines äusseren ringförmigen Formteils aus einem Rohling anhand von zwei in den Zeichnungen dargestellten Ausführungsbeispielen detaillierter beschrieben. Es zeigen:
- Fig. 1 -: eine schematische Querschnittsansicht einer Umformstufe eines ersten Ausführungsbeispiels der erfindungsgemässen Umformvorrichtung nach dem Napffliesspressen;
- Fig. 2 -: eine schematische Querschnittsansicht der Umformstufe von Fig. 1 nach dem Umformen der Napfwand;
- Fig. 3 -: eine schematische Detailansicht von Fig. 1 mit einem Napf zwischen einer Umformmatrize und einem Umformstempel nach dem Napffliesspressen;
- Fig. 4 -: eine schematische Detailansicht von Fig. 2 mit einem umgeformten Napf zwischen der Umformmatrize und dem Umformstempel nach dem Umformen der Napfwand;
- Fig. 5 -: eine schematische Querschnittsansicht eines Rohlings;
- Fig. 6 -: eine schematische Querschnittsansicht eines durch Napffliesspressen geformten Napfs;
- Fig. 7 -: eine schematische Querschnittsansicht eines umgeformten Napfs nach dem Umformen der Napfwand;
- Fig. 8 -: eine schematische Querschnittsansicht des Napfbodens, des inneren ringförmigen Formteils sowie des äusseren ringförmigen Formteils nach dem Trennen;
- Fig. 9 -: eine schematische Querschnittsansicht einer ersten Umformstufe eines zweiten Ausführungsbeispiels der erfindungsgemässen Umformvorrichtung nach dem Napffliesspressens;
- Fig. 10 -: eine schematische Querschnittsansicht einer zweiten Umformstufe des zweiten Ausführungsbeispiels der erfindungsgemässen Umformvorrichtung nach dem Umformen der Napfwand;
- Fig. 11 -: eine schematische Detailansicht von Fig. 9 mit einem Napf zwischen einer stufenlosen Umformmatrize und einem Umformstempel nach dem Napffliesspressen; und
- Fig. 12 -: eine schematische Detailansicht von Fig. 10 mit einem umgeformten Napf zwischen einer einen stufenförmigen Bereich aufweisenden Umformmatrize und einem Umformstempel nach dem Umformen der Napfwand.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

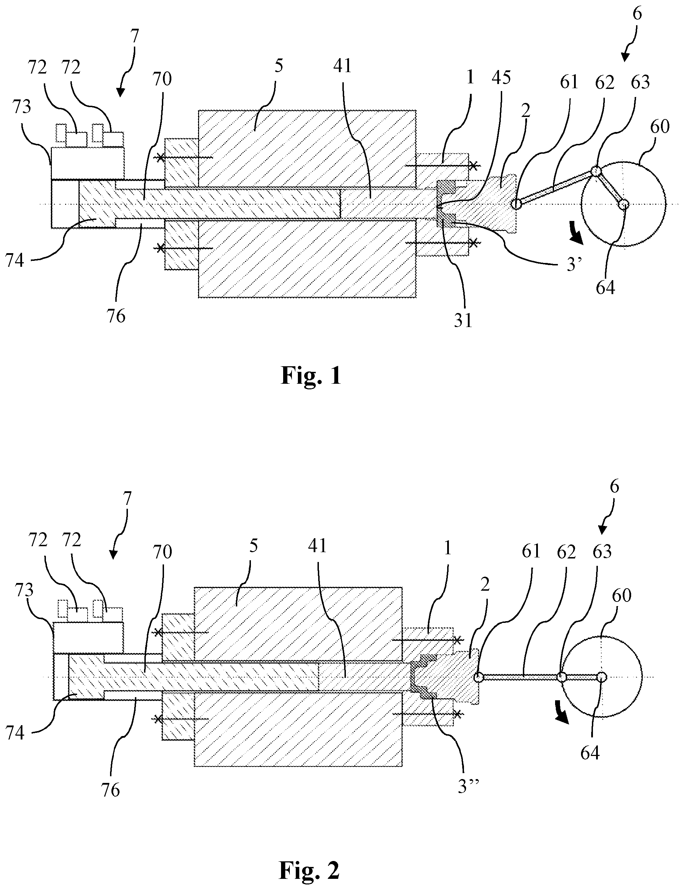

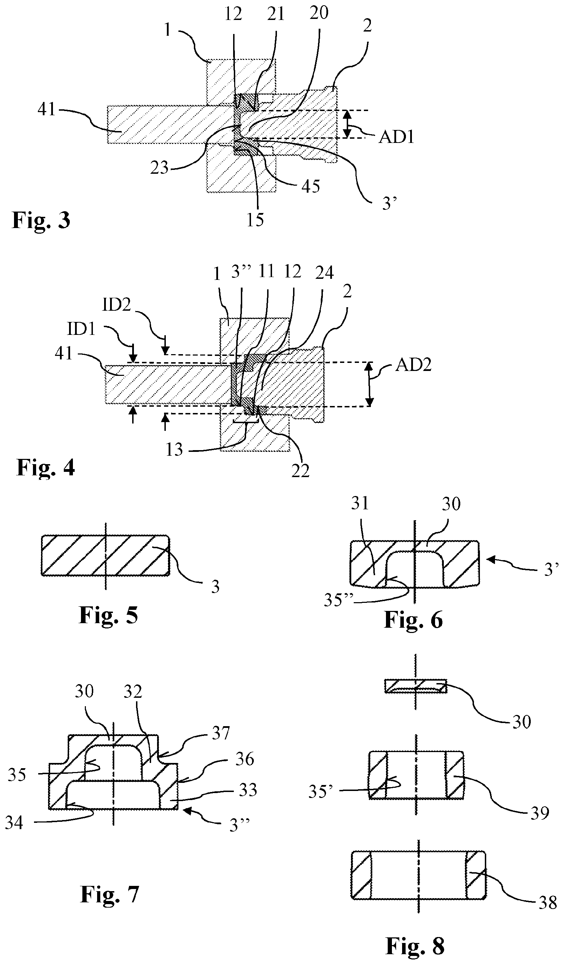

Die Figuren 1 und 2 zeigen eine schematische Querschnittsansicht einer Umformstufe eines ersten Ausführungsbeispiels der erfindungsgemässen Umformvorrichtung am Ende von zwei Arbeitsschritten, die Figuren 3 und 4 zwei entsprechende schematische Detailansichten und die Figuren 5 bis 8 ein mit der Umformvorrichtung verarbeitetes Werkstück, typischerweise aus Metall, in vier verschiedenen Verarbeitungsphasen.

Fig. 1 zeigt die Umformstufe in einer ersten Anordnung am Ende eines Napffliesspressens eines scheibenförmigen Rohlings 3 (siehe Fig. 5) zu einem Napf 3' mit einer Napfwand 31. Die Umformvorrichtung umfasst einen Maschinenkörper 5 und eine daran befestigte Umformmatrize 1, in der der aus dem Rohling 3 durch Napffliesspressen geformte Napf 3' angeordnet ist. Die Umformmatrize 1 wird auf einer dem Maschinenkörper 5 zugewandten Seite durch eine Stützfläche 45 eines bewegbar angeordneten Auswerfers 41 begrenzt. Des Weiteren umfasst die Umformvorrichtung einen von einem Stempelantrieb 6 angetriebenen Umformstempel 2. Der Stempelantrieb 6 umfasst eine von einer Stempelantriebswelle 64 angetriebene Stempelantriebskurbel 60, die über eine Gelenkverbindung 63 mit einer Stempelantriebsstange 62 verbunden ist, die wiederum über eine weitere Gelenkverbindung 61 mit dem Umformstempel 2 verbunden ist. Zum Napffliesspressen wird die Stempelantriebskurbel 60 durch die Stempelantriebswelle 64 in der durch den Pfeil angedeuteten Drehrichtung gedreht und der Umformstempel 2 wird gegen den in der Umformmatrize 1 angeordneten Rohling 3 gedrückt und der Rohling 3 wird durch die Kraft des Umformstempels 2 zum Napf 3' umgeformt.

Die Anordnung umfasst des Weiteren einen hydraulisch betriebenen und im Maschinenkörper 5 bewegbar gelagerten Aktuator 70, der den ebenfalls bewegbar im Maschinenkörper 5 gelagerten Auswerfer 41 stützt. Zum Bewegen bzw. Verstellen des Aktuators 70 wird ein mit dem Aktuator 70 fest verbundener Kolben 74 in einer Hydraulikkammer 76 eines hydraulischen Systems 7 mittels eines Hydraulikmediums, insbesondere Hydrauliköl, vor (in Richtung der Umformmatrize 1) und zurück (in Richtung von der Umformmatrize 1 weg) bewegt. Der Aktuator 70, der Kolben 74 sowie die Hydraulikkammer 76 sind jeweils kreiszylinderförmig, können in alternativen Ausführungsvarianten aber auch andere Formen haben. Des Weiteren umfasst das hydraulische System 7 eine Positionsmesseinrichtung mit einer Messelektronik sowie weitere hydraulische Elemente wie eine Hydraulikquelle, Leitungen, Hydrospeicher sowie Auffangtanks. Diese Elemente sind zeichnerisch in einem Hydraulikblock 73 zusammengefasst. Von den für das hydraulische System 7 relevanten Elementen sind aus Gründen der Übersichtlichkeit nur die beiden Servoventile 72 zur Zu- und Abfuhr des Hydraulikmediums in die bzw. aus der Hydraulikkammer 76 dargestellt. Zum Bewegen des Kolbens 74 und des Aktuators 70 in Richtung zur Umformmatrize 1 hin bzw. um eine Kraft in diese Richtung auszuüben, wird das Hydraulikmedium über die Servoventile 72 in einen Bereich der Hydraulikkammer 76 hinter dem Kolben 74 (d.h. auf der der Umformmatrize 1 abgewandten Seite des Kolbens 74) zugeführt und aus einem Bereich der Hydraulikkammer 76 vor dem Kolben 74 abgeführt. Entsprechend wird für eine Bewegung des Kolbens 74 in entgegengesetzter Richtung das Hydraulikmedium über die beiden Servoventile 72 in den Bereich der Hydraulikkammer 76 vor dem Kolben zugeführt und aus dem Bereich der Hydraulikkammer 76 hinter dem Kolben abgeführt. Das Bewegen des Kolbens 74 und des damit fest verbundenen Aktuators 70 in einem hydraulischen System 7 entspricht dem Stand der Technik und bedarf keiner weiterer Erläuterung. Weitere Details zu einem solchen hydraulischen System 7 sind beispielsweise in der WO 2017/072173 A1 beschrieben.

Mittels des Aktuators 70 lässt sich eine Kraft in Richtung der Umformmatrize 1 auf den Auswerfer 41 ausüben. Das hier verwendete hydraulische System 7 ist wie das in der WO 2017/072173 A1 beschriebene System zum einen dazu ausgebildet, den Rohling 3 beim Napffliesspressen bzw. den Napf 3' beim Umformen der Napfwand 31 zu stützen und zum anderen einen umgeformten Napf 3" (siehe Figuren 2 und 7) aus der Umformmatrize 1 auszuwerfen.

Fig. 1 zeigt die Umformvorrichtung in einer Anordnung, in der der Rohling 3 gerade zum Napf 3' umgeformt wurde. Fig. 2 zeigt die Umformvorrichtung in einer Anordnung, in der die Napfwand 31 des zuvor geformten Napfs 3' in einem auf das Napffliesspressen folgenden Schritt des Verfahrens umgeformt wurde. Wie in Fig. 2 gezeigt, wurde der Aktuator 70 zurückbewegt, wodurch sich auch der Auswerfer 41 zurückbewegen lässt, um einen abgestuften Bereich der Umformmatrize 1 zum Umformen der Napfwand freizugegeben. Des Weiteren wurde der Umformstempel 2 weiter gegen den in der Umformmatrize 1 angeordneten Napf 3' gedrückt und durch Umformen der Napfwand 31 zum umgeformten Napf 3" umgeformt. Der Umformstempel 2 wurde durch ein weiteres Rotieren der Stempelantriebskurbel 60 in der durch den Pfeil angedeuteten Drehrichtung bewegt.

Das Verfahren zur Herstellung eines inneren und eines äusseren ringförmigen Formteils aus dem Rohling 3 wird nun anhand der Figuren 3 und 4, die detaillierte Ansichten der Umformmatrize 1, des Umformstempels 2 sowie des Auswerfers 41 zeigen, sowie der Figuren 5 bis 8, die den Rohling 3, den Napf 3', den umgeformten Napf 3" sowie ein inneres ringförmiges Formteil 39 und ein äusseres ringförmiges Formteil 38 in einer Querschnittsansicht darstellen, näher erläutert.

Fig. 3 zeigt eine Querschnittsansicht des Auswerfers 41, des Umformstempels 2 sowie einer Umformmatrize 1 mit dem in der Umformmatrize 1 angeordneten Napf 3'. Die Anordnung entspricht der in Fig. 1 dargestellten Anordnung, in der der Rohling 3 durch Napffliesspressen zum Napf 3' umgeformt wurde. Ein solcher scheibenförmiger Rohling 3 ist in Fig. 5 dargestellt. Der Rohling 3 ist hier, wie alle anderen in den Figuren 6 bis 8 in Querschnittsansichten gezeigten Objekte bzw. Werkstücke, rotationssymmetrisch um die jeweilige gestrichelte Linie.

Der Napf 3' ist in Fig. 6 vergrössert dargestellt. Er umfasst die stufenlose Napfwand 31, die eine umlaufende Innenfläche 35" aufweist, und einen ausgeformten Napfboden 30. Die Form des Napfs 3' wird im Wesentlichen durch die Stützfläche 45 des Auswerfers 41, eine in der Anordnung gemäss Fig. 3 in der gleichen Ebene wie die Stützfläche 45 angeordnete, diese ringförmig umgebende Stufenfläche 15 der Umformmatrize 1, eine stufenlose umlaufende Innenfläche 12 der Umformmatrize 1, eine Stirnfläche 23 eines ersten Umformstempelteils 20 des Umformstempels 2 sowie eine erste umlaufende Aussenfläche 21 des ersten Umformstempelteils 20 bestimmt. Der Napfboden 30 wird zwischen der Stützfläche 45 des Auswerfers 41 und der Stirnfläche 23 des ersten Umformstempelteils 20 geformt. Der Abstand zwischen der Stützfläche 45 und der Stirnfläche 23 liegt vorzugsweise in einem Bereich von 1 mm bis 6 mm und beträgt in diesem Ausführungsbeispiel ca. 3 mm, wodurch der Napfboden 30 zu einer diesem Abstand entsprechenden Dicke geformt wird. Die erste umlaufende Aussenfläche 21 des ersten Umformstempelteils 20 formt die umlaufende Innenfläche 35" des Napfs 3'. Diese bildet wiederum einen Teil einer umlaufenden Innenfläche 35' des in Fig. 8 dargestellten inneren ringförmigen Formteils 39. Der erste Umformstempelteil 20 hat einen ersten Aussendurchmesser AD1 in einem Bereich von 10 mm bis 150 mm.

Fig. 4 zeigt eine Querschnittsansicht derselben Elemente wie Fig. 3, jedoch in der in Fig. 2 gezeigten Anordnung, in der der Napf 3' durch Umformen der Napfwand 31 bereits zum umgeformten Napf 3" umgeformt wurde. Der umgeformte Napf 3" ist in Fig. 7 dargestellt. Er umfasst einen inneren ringförmigen Abschnitt 32 und einen äusseren ringförmigen Abschnitt 33.

Der Auswerfer 41 mit der Stützfläche 45 wurde zurückbewegt, wodurch ein Bereich der Umformmatrize 1 mit einer ersten umlaufenden Innenfläche 11 freigegeben wurde. Der Bereich der Umformmatrize 1 mit der ersten umlaufenden Innenfläche 11 weist einen ersten Innendurchmesser ID1 auf. Der Bereich der Umformmatrize 1 mit der zweiten umlaufenden Innenfläche 12 weist einem zweiten Innendurchmesser ID2 auf, wobei der erste Innendurchmesser ID1 kleiner als der zweite Innendurchmesser ID2 ist. Der erste Innendurchmesser ID1 ist in einem Bereich von 16 mm bis 170 mm und der zweite Innendurchmesser ID2 ist in einem Bereich von 22 mm bis 190 mm. Aufgrund der beiden verschiedenen Innendurchmesser ID1, ID2 bildet sich am Übergang der ersten und der zweiten umlaufenden Innenfläche 11, 12 eine Stufe mit der Stufenfläche 15. Die erste umlaufende Innenfläche 11 bildet zusammen mit der zweiten umlaufenden Innenfläche 12 einen stufenförmigen Bereich 13 der Umformmatrize 1.

Der Umformstempel 2 wird gegen den in der Umformmatrize 1 angeordneten Napf 3' gedrückt, wodurch die stufenlose Napfwand 31 in den inneren ringförmigen Abschnitt 32 sowie den äusseren ringförmigen Abschnitt 33 des umgeformten Napfs 3" umgeformt wird. Die erste umlaufende Innenfläche 11 der Umformmatrize 1 formt die umlaufende Aussenfläche 37 des inneren ringförmigen Abschnitts 32 und die zweite umlaufende Innenfläche 12 formt die umlaufende Aussenfläche 36 des äusseren ringförmigen Abschnitts 33. Die umlaufende Innenfläche 35 - die einem Teil der umlaufenden Innenfläche 35' des inneren ringförmigen Formteils 39 entspricht - wurde bereits im vorangehenden Schritt als Teil der umlaufenden Innenfläche 35" des Napfs 3' geformt. Des Weiteren umfasst der Umformstempel 2 einen zweiten Umformstempelteil 24 mit einem Aussendurchmesser AD2 in einem Bereich von 16 mm bis 170 mm. Eine zweite umlaufende Aussenfläche 22 des zweiten Umformstempelteils 24 formt die umlaufende Innenfläche 34 des äusseren ringförmigen Abschnitts 33. Die radialen Abmessungen des umgeformten Napfs 3" sind somit durch den ersten und den zweiten Aussendurchmesser AD1, AD2 des jeweiligen Umformstempelteils und den ersten und den zweiten Innendurchmesser ID1, ID2 der jeweiligen Bereiche der Umformmatrize 1 vorgegeben.

Das Napffliesspressen des Rohlings 3 zum Napf 3' sowie das Umformen der Napfwand 31 werden durch Warmumformen bei Temperaturen ab 500°C durchgeführt. In einem alternativen Ausführungsbeispiel lassen sich diese Umformprozesse auch durch Kaltumformen durchführen.

Nach dem Umformen der Napfwand 31 wird der Umformstempel 2 mittels des Stempelantriebs 6 durch weiteres Rotieren der Stempelantriebskurbel 60 wieder vom umgeformten Napf 3" und von der Umformmatrize 1 wegbewegt. Der umgeformte Napf 3" wird anschliessend mittels des Auswerfers 41 aus der Umformmatrize 1 ausgeworfen.

Nach dem Auswerfen werden in einer weiteren, in den Figuren nicht gezeigten Arbeitsstufe aus dem umgeformten Napf 3" das äussere ringförmige Formteil 38 sowie das innere ringförmige Formteil 39 hergestellt, siehe Fig. 8. Hierfür werden mittels eines geeigneten Trennwerkzeugs, insbesondere eines Stanzwerkzeugs, der äussere ringförmige Abschnitt 33 vom inneren ringförmigen Abschnitt 32 sowie der innere ringförmige Abschnitt 32 vom Napfboden 30 getrennt. Der abgetrennte äussere ringförmige Abschnitt 33 bildet das äussere ringförmige Formteil 38 und der abgetrennte innere ringförmige Abschnitt 32 bildet das innere ringförmige Formteil 39. Zusätzlich werden das äussere ringförmige Formteil 38 und das innere ringförmige Formteil 39 nach dem Trennen üblicherweise gewalzt oder aufgeweitet. Der weggestanzte Napfboden 30 wird als Ausschuss entsorgt.

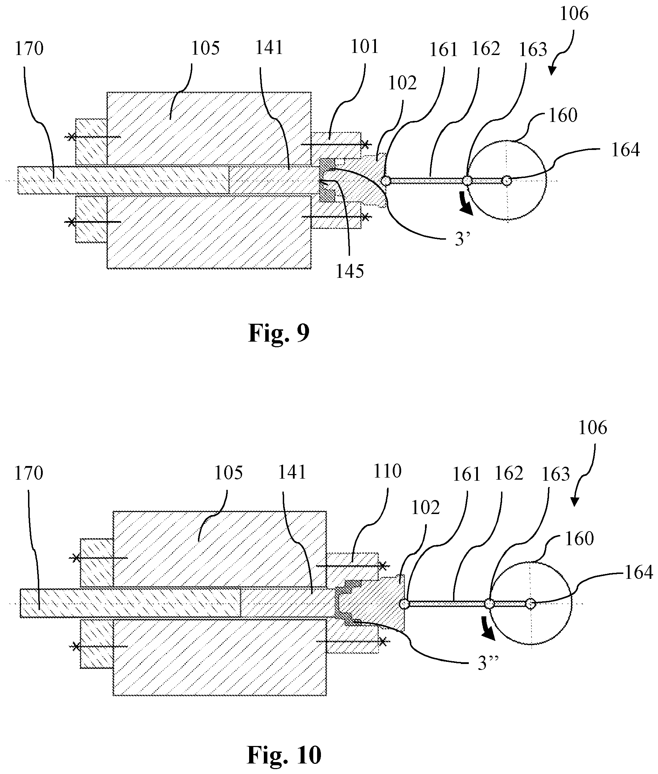

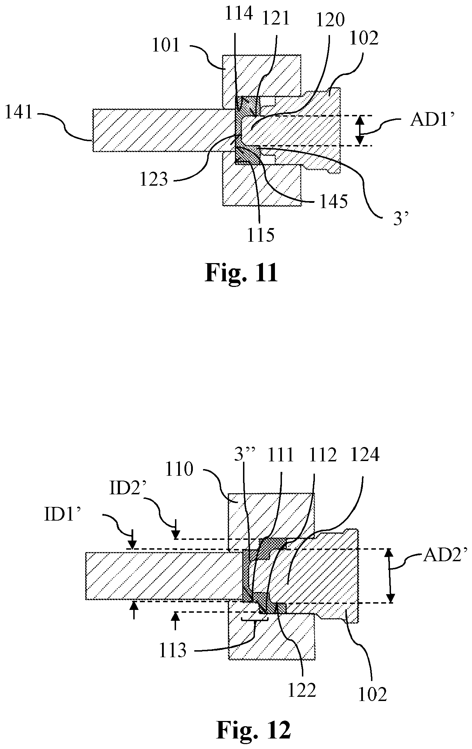

Die Figuren 9 und 10 zeigen schematische Querschnittsansichten einer ersten und einer zweiten Umformstufe eines zweiten Ausführungsbeispiels der erfindungsgemässen Umformvorrichtung am Ende von zwei Arbeitsschritten und die Figuren 11 und 12 zwei entsprechende schematische Detailansichten. Wie beim ersten Ausführungsbeispiel zeigen die Figuren 5 bis 8 ein mit der Umformvorrichtung verarbeitetes Werkstück in vier verschiedenen Verarbeitungsphasen.

Fig. 9 zeigt die erste Umformstufe der Umformvorrichtung am Ende des Napffliesspressens des Rohlings 3 zu einem Napf 3'. Die erste Umformstufe umfasst einen Maschinenkörper 105 und eine daran befestigte stufenlose Umformmatrize 101, in der der aus dem Rohling 3 durch Napffliesspressen geformte Napf 3' angeordnet ist. Die Umformmatrize 101 wird auf einer dem Maschinenkörper 105 zugewandten Seite durch eine Stützfläche 145 eines Auswerfers 141 begrenzt. Des Weiteren umfasst die Umformvorrichtung einen von einem Stempelantrieb 106 angetriebenen Umformstempel 102. Der Stempelantrieb 106 umfasst eine von einer Stempelantriebswelle 164 angetriebene Stempelantriebskurbel 160, die über eine Gelenkverbindung 163 mit einer Stempelantriebsstange 162 verbunden ist, die wiederum über eine weitere Gelenkverbindung 161 mit dem Umformstempel 102 verbunden ist. Zum Napffliesspressen wird die Stempelantriebskurbel 160 durch die Stempelantriebswelle 164 in der durch den Pfeil angedeuteten Drehrichtung gedreht und der Umformstempel 102 wird gegen den in der Umformmatrize 101 angeordneten Rohling 3 gedrückt und der Rohling 3 wird durch das Drücken des Umformstempels 102 zum Napf 3' umgeformt. In der in Fig. 9 gezeigten Anordnung, in der der Napf 3' gerade geformt wurde, ist der Umformstempel 102 bereits maximal ausgelenkt und lässt sich auch durch ein weiteres Rotieren der Stempelantriebskurbel 160 nicht weiter in Richtung des Napfs 3' bzw. der Umformmatrize 101 bewegen.

Stattdessen wird der Umformstempel 102 durch weiteres Rotieren der Stempelantriebskurbel 160 vom Napf 3' und der stufenlosen Umformmatrize 101 wegbewegt und der Napf 3' kann mittels des Auswerfers 141 ausgeworfen werden.

Zum Umformen der Napfwand 31 wird der Napf 3' in eine zweite Umformstufe umgesetzt, die in Fig. 10 dargestellt ist.

Die zweite Umformstufe ist baugleich mit der ersten Umformstufe mit Ausnahme der Umformmatrize. Die stufenlose Umformmatrize 101 ist in der zweiten Umformstufe durch eine einen stufenförmigen Bereich umfassende Umformmatrize 110 ersetzt. In diesem Ausführungsbeispiel ist auch der Umformstempel 102 baugleich mit dem Umformstempel 102 der ersten Umformstufe und daher mit dem gleichen Bezugszeichen versehen. In alternativen Ausführungsvarianten könnten auch zwei unterschiedliche Umformstempel eingesetzt werden.

Zum Umformen der Napfwand 31 des in der Umformmatrize 110 angeordneten Napfs 3' wird wieder die Stempelantriebskurbel 160 durch die Stempelantriebswelle 164 in der durch den Pfeil angedeuteten Drehrichtung gedreht und der Umformstempel 102 wird gegen den in der Umformmatrize 101 angeordneten Napf 3' gedrückt. Der Napf 3' wird durch Umformen der Napfwand 31 zum umgeformten Napf 3" umgeformt. In der in Fig. 10 gezeigten Anordnung, in der der umgeformte Napf 3" gerade geformt wurde, ist der Umformstempel 102 bereits maximal ausgelenkt und lässt sich auch durch ein weiteres Rotieren der Stempelantriebskurbel 160 nicht weiter in Richtung des umgeformten Napfs 3" bzw. der Umformmatrize 110 bewegen.

Der Auswerfer 141 lässt sich in diesem zweiten Ausführungsbeispiel ebenfalls von einem Aktuator 170 bewegen, jedoch nur um den Napf 3' bzw. den umgeformten Napf 3" aus der Umformmatrize 101 bzw. aus der Umformmatrize 110 auszuwerfen. In diesem Ausführungsbeispiel muss der Auswerfer 141 nicht weiter zurückbewegbar angeordnet sein. Ein solcher Auswerfmechanismus entspricht dem Stand der Technik und wird hier nicht weiter beschrieben. In alternativen Ausführungsbeispielen lassen sich die Umformmatrizen 101, 110 auch durch eine unbewegliche Begrenzungswand anstatt der Stützfläche 145 des Auswerfers 141 begrenzen und der Napf 3' bzw. der umgeformte Napf 3" von der dem Umformstempel 102 zugewandten Seite her aus der jeweiligen Umformmatrize 101, 110 entfernen.

Fig. 11 zeigt eine Querschnittsansicht des Auswerfers 141, des Umformstempels 102 sowie der stufenlosen Umformmatrize 101 mit dem darin angeordneten Napf 3'. Die Anordnung entspricht der in Fig. 9 dargestellten Anordnung der ersten Umformstufe, in der der Rohling 3 durch Napffliesspressen zum Napf 3' umgeformt wurde.

Die Form des Napfs 3' wird im Wesentlichen durch die Stützfläche 145 des Auswerfers 141, eine in der Anordnung gemäss Fig. 11 in der gleichen Ebene wie die Stützfläche 145 angeordnete, diese ringförmig umgebende Bodenfläche 115 der Umformmatrize 101, eine stufenlose umlaufende Innenfläche 114 der Umformmatrize 101, eine Stirnfläche 123 eines ersten Umformstempelteils 120 des Umformstempels 102 sowie eine erste umlaufende Aussenfläche 121 des ersten Umformstempelteils 120 bestimmt. Der Napfboden 30 wird zwischen einer Stützfläche 145 des Auswerfers 141 und der Stirnfläche 123 des ersten Umformstempelteils 120 geformt. In einem alternativen Ausführungsbeispiel kann die Stützfläche 145 auch eine Oberfläche einer nicht bewegbaren Begrenzungswand sein. Die erste umlaufende Aussenfläche 121 des ersten Umformstempelteils 120 formt die umlaufende Innenfläche 35" des Napfs 3'. Diese bildet wiederum einen Teil der umlaufenden Innenfläche 35' des inneren ringförmigen Formteils 39.

Fig. 12 zeigt eine Querschnittsansicht des Auswerfers 141, des Umformstempels 102 sowie einer einen stufenförmigen Bereich 113 umfassenden Umformmatrize 110 mit dem in der Umformmatrize 110 angeordneten umgeformten Napf 3". Die Anordnung entspricht der in Fig. 10 dargestellten Anordnung der zweiten Umformstufe, in der der Napf 3' durch Umformen der Napfwand 31 bereits zum umgeformten Napf 3" umgeformt wurde.

Die Umformmatrize 110 umfasst einen Bereich mit einer ersten umlaufenden Innenfläche 111 mit einem ersten Innendurchmesser ID1' sowie einen Bereich mit einem zweiten Innendurchmesser ID2', wobei der erste Innendurchmesser ID1' kleiner ist als der zweite Innendurchmesser ID2'. Am Übergang der ersten umlaufenden Innenfläche 111 und der zweiten umlaufenden Innenfläche 112 bildet sich eine Stufe und die erste umlaufende Innenfläche 111 und die zweite umlaufende Innenfläche 112 bilden einen stufenförmigen Bereich 113.

Der Umformstempel 102 wird gegen den in der Umformmatrize 110 angeordneten Napf 3' gedrückt, wodurch die stufenlose Napfwand 31 in den inneren ringförmigen Abschnitt 32 sowie den äusseren ringförmigen Abschnitt 33 des umgeformten Napfs 3" umgeformt wird. Die erste umlaufende Innenfläche 111 der Umformmatrize 110 formt die umlaufende Aussenfläche 37 des inneren ringförmigen Abschnitts 32 und die zweite umlaufende Innenfläche 112 formt die umlaufende Aussenfläche 36 des äusseren ringförmigen Abschnitts 33. Die umlaufende Innenfläche 35 - die einem Teil der umlaufenden Innenfläche 35' des inneren ringförmigen Formteils 39 entspricht - wurde bereits im vorangehenden Schritt als Teil der umlaufenden Innenfläche 35" des Napfs 3' geformt. Des Weiteren umfasst der Umformstempel 102 einen zweiten Umformstempelteil 124 mit einem Aussendurchmesser AD2', der grösser ist als der erster Aussendurchmesser AD1'. Eine zweite umlaufende Aussenfläche 122 des zweiten Umformstempelteils 124 formt die umlaufende Innenfläche 34 des äusseren ringförmigen Abschnitts 33.

Die Aussendurchmesser AD1', AD2' sowie die Innendurchmesser ID1', ID2' entsprechen den Aussendurchmessern AD1, AD2 bzw. den Innendurchmessern ID1, ID2 des ersten Ausführungsbeispiels.

Die nachfolgenden Arbeitsschritte zur Herstellung des äusseren ringförmigen Formteils 38 und des inneren ringförmigen Formteils 39 entsprechen denen des ersten Ausführungsbeispiels und werden daher an dieser Stelle nicht wiederholt.

## Patentansprüche

1. Verfahren zur Herstellung eines inneren (39) und eines äusseren (38) ringförmigen Formteils aus einem Rohling (3), umfassend die Schritte:
- Napffliesspressen des Rohlings (3) zu einem Napf (3') mit einem ausgeformten Napfboden (30) und einer daran anschliessenden stufenlosen Napfwand (31),
- Umformen der Napfwand (31) derart, dass die umgeformte Napfwand einen inneren ringförmigen Abschnitt (32) und einen daran anschliessenden, in axialer Richtung teilweise versetzten äusseren ringförmigen Abschnitt (33) umfasst, und
- Trennen des äusseren ringförmigen Abschnitts (33) vom inneren ringförmigen Abschnitt (32) sowie Trennen des inneren ringförmigen Abschnitts (32) vom ausgeformten Napfboden (30), wobei der abgetrennte äussere ringförmige Abschnitt das äussere ringförmige Formteil (38) bildet und der abgetrennte innere ringförmige Abschnitt das innere ringförmige Formteil (39) bildet.

2. Verfahren nach Patentanspruch 1, **dadurch gekennzeichnet, dass** beim Napffliesspressen des Rohlings (3) der Napfboden (30) zwischen einer Stirnfläche (23, 123) eines ersten Umformstempelteils (20, 120) und einer Stützfläche (45,145) eines Auswerfers (41, 141) geformt wird.

3. Verfahren nach Patentanspruch 2, **dadurch gekennzeichnet, dass** beim Napffliesspressen des Rohlings (3) zumindest ein Teil einer umlaufenden Innenfläche (35') des inneren ringförmigen Formteils (39) durch eine umlaufende Aussenfläche (21, 121) des ersten Umformstempelteils (20, 120) geformt wird.

4. Verfahren nach einem der Patentansprüche 1 bis 3, **dadurch gekennzeichnet, dass** das Napffliesspressen des Rohlings (3) in einer ersten Umformstufe mit einer stufenlosen Umformmatrize (101) erfolgt und das Umformen der Napfwand (31) in einer zweiten Umformstufe mit einer einen stufenförmigen Bereich (113) aufweisenden Umformmatrize (110) erfolgt.

5. Verfahren nach einem der Patentansprüche 1 bis 3, **dadurch gekennzeichnet, dass** das Napffliesspressen des Rohlings (3) und das Umformen der Napfwand (31) nacheinander in derselben Umformstufe mit nur einer Umformmatrize (1) durchgeführt werden.

6. Verfahren nach den Patentansprüchen 2 und 5, **dadurch gekennzeichnet, dass** die Umformmatrize (1) einen stufenförmigen Bereich (13) zum Umformen der Napfwand (31) umfasst und durch Zurückbewegen des Auswerfers (41) mit der Stützfläche (45) eine umlaufende Innenfläche (11) des stufenförmigen Bereichs (13) der Umformmatrize (1) freigegeben wird.

7. Verfahren nach einem der Patentansprüche 1 bis 6, **dadurch gekennzeichnet, dass** das Napffliesspressen des Rohlings (3) und das Umformen der Napfwand (31) durch Warmumformen bei Temperaturen ab 500°C erfolgt.

8. Umformvorrichtung zur Herstellung eines inneren (39) und eines äusseren (38) ringförmigen Formteils aus einem Rohling (3), wobei die Umformvorrichtung umfasst:
- einen ersten Umformstempelteil (20, 120) für ein Napffliesspressen des Rohlings (3) zu einem Napf (3') mit einem ausgeformten Napfboden (30) und einer daran anschliessenden stufenlosen Napfwand (31),
- einen zweiten Umformstempelteil (24, 124) sowie eine einen stufenförmigen Bereich (13, 113) aufweisende Umformmatrize (1, 110) zum Umformen der Napfwand (31) derart, dass sie einen inneren ringförmigen Abschnitt (32) und einen daran anschliessenden, in axialer Richtung teilweise versetzten äusseren ringförmigen Abschnitt (33) umfasst,
und
- ein Trennwerkzeug zum Trennen des äusseren ringförmigen Abschnitts (33) vom inneren ringförmigen Abschnitt (32) sowie zum Trennen des inneren ringförmigen Abschnitts (32) vom ausgeformten Napfboden (30), wobei der abgetrennte äussere ringförmige Abschnitt den äusseren ringförmigen Formteil (38) bildet und der abgetrennte innere ringförmige Abschnitt das innere ringförmige Formteil (39) bildet.

9. Umformvorrichtung nach Patentanspruch 8, **dadurch gekennzeichnet, dass** sie einen Auswerfer (41, 141) mit einer Stützfläche (45, 145) und der erste Umformstempelteil (20, 120) eine Stirnfläche (23, 123) zum Formen des Napfbodens (30) beim Napffliesspressen des Rohlings (3) umfasst.

10. Umformvorrichtung nach Patentanspruch 8 oder 9, **dadurch gekennzeichnet, dass** der erste Umformstempelteil (20, 120) eine erste umlaufende Aussenfläche (21, 121) zum Formen zumindest eines Teils einer umlaufenden Innenfläche (35') des inneren ringförmigen Formteils (39) umfasst.

11. Umformvorrichtung nach Patentanspruch 9 oder 10, **dadurch gekennzeichnet, dass** der Auswerfer (41) mit der Stützfläche (45) zurückbewegbar angeordnet ist, um eine umlaufende Innenfläche (11) des stufenförmigen Bereichs (13) der Umformmatrize (1) zum Umformen der Napfwand (31) freizugegeben.

12. Umformvorrichtung nach einem der Patentansprüche 8 bis 11, **dadurch gekennzeichnet, dass** der erste Umformstempelteil (20), der zweite Umformstempelteil (24) sowie die den stufenförmigen Bereich (13) aufweisende Umformmatrize (1) Teil einer gemeinsamen Umformstufe sind.

13. Umformvorrichtung nach einem der Patentansprüche 8 bis 11, **dadurch gekennzeichnet, dass** der erste Umformstempelteil (120) sowie eine stufenlose Umformmatrize (101) Teil einer ersten Umformstufe sind und der zweite Umformstempelteil (124) sowie die den stufenförmigen Bereich (113) aufweisende Umformmatrize (110) Teil einer zweiten Umformstufe sind.

## Claims

1. Method for producing an inner (39) and an outer (38) ring-shaped formed part from a blank (3), comprising the steps:
- cup extrusion of the blank (3) to form a cup (3') having a drawn-out cup base (30) and an adjoining stepless cup wall (31),
- forming of the cup wall (31) in such a way that the formed cup wall comprises an inner ring-shaped section (32) and an adjoining outer ring-shaped section (33) which is partly offset in an axial direction, and
- separation of the outer ring-shaped section (33) from the inner ring-shaped section (32) and separation of the inner ring-shaped section (32) from the drawn-out cup base (30), the detached outer ring-shaped section constituting the outer ring-shaped formed part (38) and the detached inner ring-shaped section constituting the inner ring-shaped formed part (39).

2. Method according to claim 1, **characterised in that** during the cup extrusion of the blank (3) the cup base (30) is shaped between an end face (23, 123) of a first forming punch portion (20, 120) and a support face (45, 145) of an ejector (41, 141).

3. Method according to claim 2, **characterised in that** during the cup extrusion of the blank (3) at least a part of a peripheral inner surface (35') of the inner ring-shaped formed part (39) is shaped by a peripheral outer surface (21, 121) of the first forming punch portion (20, 120).

4. Method according to any one of claims 1 to 3, **characterised in that** the cup extrusion of the blank (3) is effected in a first forming station with a stepless forming die (101) and the forming of the cup wall (31) is effected in a second forming station with a forming die (110) having a stepped region (113).

5. Method according to any one of claims 1 to 3, **characterised in that** the cup extrusion of the blank (3) and the forming of the cup wall (31) are carried out in succession in the same forming station with only one forming die (1).

6. Method according to claims 2 and 5, **characterised in that** the forming die (1) comprises a stepped region (13) for forming the cup wall (31), and a peripheral inner surface (11) of the stepped region (13) of the forming die (1) is exposed by retraction of the ejector (41) having the support face (45).

7. Method according to any one of claims 1 to 6, **characterised in that** the cup extrusion of the blank (3) and the forming of the cup wall (31) are effected by hot-forming at temperatures of 500°C and above.

8. Forming device for producing an inner (39) and an outer (38) ring-shaped formed part from a blank (3), the forming device comprising:
- a first forming punch portion (20, 120) for cup extrusion of the blank (3) to form a cup (3') having a drawn-out cup base (30) and an adjoining stepless cup wall (31),
- a second forming punch portion (24, 124) and a forming die (1, 110) having a stepped region (13, 113) for forming the cup wall (31) in such a way that it comprises an inner ring-shaped section (32) and an adjoining outer ring-shaped section (33) which is partly offset in an axial direction, and
- a separating tool for separating the outer ring-shaped section (33) from the inner ring-shaped section (32) and for separating the inner ring-shaped section (32) from the drawn-out cup base (30), the detached outer ring-shaped section constituting the outer ring-shaped formed part (38) and the detached inner ring-shaped section constituting the inner ring-shaped formed part (39).

9. Forming device according to claim 8, **characterised in that** it comprises an ejector (41, 141) having a support face (45, 145), and the first forming punch portion (20, 120) comprises an end face (23, 123) for shaping the cup base (30) during the cup extrusion of the blank (3).

10. Forming device according to claim 8 or 9, **characterised in that** the first forming punch portion (20, 120) comprises a first peripheral outer surface (21, 121) for shaping at least a part of a peripheral inner surface (35') of the inner ring-shaped formed part (39).

11. Forming device according to claim 9 or 10, **characterised in that** the ejector (41) having the support face (45) is arranged to be retractable in order to expose a peripheral inner surface (11) of the stepped region (13) of the forming die (1) for forming the cup wall (31).

12. Forming device according to any one of claims 8 to 11, **characterised in that** the first forming punch portion (20), the second forming punch portion (24) and the forming die (1) having the stepped region (13) are part of a common forming station.

13. Forming device according to any one of claims 8 to 11, **characterised in that** the first forming punch portion (120) and a stepless forming die (101) are part of a first forming station, and the second forming punch portion (124) and the forming die (110) having the stepped region (113) are part of a second forming station.

## Revendications

1. Procédé de fabrication d'une pièce façonnée annulaire interne (39) et d'une pièce façonnée annulaire externe (38) à partir d'une ébauche (3), comprenant les étapes suivantes :
- extrusion en godet de l'ébauche (3) pour former un godet (3') avec un fond de godet (30) façonné et une paroi de godet (31) dépourvue de gradin qui s'y raccorde,
- mise en forme de la paroi de godet (31), de manière à ce que la paroi de godet mise en forme comporte une partie annulaire interne (32) et une partie annulaire externe (33) se raccordant à celle-ci et décalée en partie dans la direction axiale, et
- séparation de la partie annulaire externe (33) de la partie annulaire interne (32), et séparation de la partie annulaire interne (32) du fond de godet (30) façonné, la partie annulaire externe, qui a été séparée, constituant la pièce façonnée annulaire externe (38), et la partie annulaire interne, qui a été séparée, constituant la pièce façonnée annulaire interne (39).

2. Procédé selon la revendication 1, **caractérisé en ce que**, lors de l'extrusion en godet de l'ébauche (3), le fond de godet (30) est façonné entre une face frontale (23, 123) d'une première partie de poinçon de formage (20, 120) et une surface d'appui (45, 145) d'un éjecteur (41, 141).

3. Procédé selon la revendication 2, **caractérisé en ce que**, lors de l'extrusion en godet de l'ébauche (3), au moins une partie d'une surface interne (35') périphérique de la pièce façonnée annulaire interne (39) est mise en forme par une surface externe (21, 121) périphérique de la première partie de poinçon de formage (20, 120).

4. Procédé selon une des revendications 1 à 3, **caractérisé en ce que** l'extrusion en godet de l'ébauche (3) est réalisée dans un premier étage de formage, avec une matrice de formage (101) dépourvue de gradin, et la mise en forme de la paroi de godet (31) est réalisée dans un deuxième étage de formage, avec une matrice de formage (110) présentant une zone (113) en forme de gradin.

5. Procédé selon une des revendications 1 à 3, **caractérisé en ce que** l'extrusion en godet de l'ébauche (3) et la mise en forme de la paroi de godet (31) sont réalisées successivement dans le même étage de formage, avec une seule matrice de formage (1).

6. Procédé selon les revendications 2 et 5, **caractérisé en ce que** la matrice de formage (1) comprend une partie en gradin (13) destinée à la mise en forme de la paroi de godet (31), et que par déplacement en arrière de l'éjecteur (41) doté de la surface d'appui (45), une surface interne (11) périphérique de la partie en gradin (13) de la matrice de formage (1) est dégagée.

7. Procédé selon une des revendications 1 à 6, **caractérisé en ce que** l'extrusion en godet de l'ébauche (3) et la mise en forme de la paroi de godet (31) sont réalisées par formage à chaud, à des températures à partir de 500 °C.

8. Dispositif de formage destiné à la fabrication d'une pièce façonnée annulaire interne (39) et d'une pièce façonnée annulaire externe (38) à partir d'une ébauche (3), le dispositif de formage comprenant :
- une première partie de poinçon de formage (20, 120) pour une extrusion en godet de l'ébauche (3) afin d'obtenir un godet (3') avec un fond de godet (30) façonné et une paroi de godet (31) dépourvue de gradin qui s'y raccorde,
- une deuxième partie de poinçon de formage (24, 124) et une matrice de formage (1, 110) présentant une partie en gradin (13, 113) et destinée à la mise en forme de la paroi de godet (31), de manière à ce qu'elle comporte une partie annulaire interne (32) et une partie annulaire externe (33) se raccordant à celle-ci et décalée en partie dans la direction axiale,
et
- un outil de séparation destiné à séparer la partie annulaire externe (33) de la partie annulaire interne (32) et à séparer la partie annulaire interne (32) du fond de godet (30) façonné, la partie annulaire externe séparée constituant la pièce façonnée annulaire externe (38), et la partie annulaire interne séparée constituant la pièce façonnée annulaire interne (39).

9. Dispositif de formage selon la revendication 8, **caractérisé en ce qu'**il comprend un éjecteur (41, 141) doté d'une surface d'appui (45, 145), et la première partie de poinçon de formage (20, 120) comprend une face frontale (23, 123) destinée à la mise en forme du fond de godet (30) lors de l'extrusion en godet de l'ébauche (3).

10. Dispositif de formage selon la revendication 8 ou 9, **caractérisé en ce que** la première partie de poinçon de formage (20, 120) comprend une première surface externe (21, 121) périphérique, destinée à la mise en forme d'au moins une partie d'une surface interne (35') périphérique de la pièce façonnée annulaire interne (39).

11. Dispositif de formage selon la revendication 9 ou 10, **caractérisé en ce que** l'éjecteur (41) doté de la surface d'appui (45) est disposé de manière à pouvoir être déplacé en arrière, afin de dégager une surface interne (11) périphérique de la partie en gradin (13) de la matrice de formage (1), en vue de mettre en forme la paroi de godet (31).

12. Dispositif de formage selon une des revendications 8 à 11, **caractérisé en ce que** la première partie de poinçon de formage (20), la deuxième partie de poinçon de formage (24) et la matrice de formage (1) présentant la partie en gradin (13) font partie d'un étage de formage commun.

13. Dispositif de formage selon une des revendications 8 à 11, **caractérisé en ce que** la première partie de poinçon de formage (120) ainsi qu'une matrice de formage (101) dépourvue de gradin font partie d'un premier étage de formage, et la deuxième partie de poinçon de formage (124) ainsi que la matrice de formage (110) présentant la partie en gradin (113) font partie d'un deuxième étage de formage.
